# EUROPEAN PATENT SPECIFICATION

(11) **EP 0 478 517 B1**
(45) Date of publication and mention of the grant of the patent: **15.05.1996**
(21) Application number: 91830388.4
(22) Date of filing: 23.09.1991
(51) Int. Cl.: F16D 3/70

(54) **A drive coupling for association with virtually coaxial shafts**
Treibkupplung für zwei im wesentlichen koaxiale Wellen
Accouplement pour arbres pratiquement coaxiaux

(30) Priority: 24.09.1990 IT 490690 U; 24.09.1990 IT 366190; 24.09.1990 IT 366290
(43) Date of publication of application: 01.04.1992
(73) Proprietor: O.M.C. S.n.c. di DANTE CAVALLI & C., 40055 Villanova di Castenaso (Bologna) (IT)
(72) Inventor: Cavalli, Dante, I-40055 Villanova di Castenaso (Bologne) (IT)
(74) Representative: Lanzoni, Luciano

(56) References cited:
- DE-A- 3 428 764
- DE-C- 823 546
- DE-C- 928 747
- FR-A- 793 819
- FR-A- 819 221
- FR-A- 2 075 656
- GB-A- 390 420
- GB-A- 510 770
- GB-A- 1 130 388
- US-A- 1 372 404
- US-A- 1 642 907
- US-A- 1 933 072
- US-A- 4 319 672

## Description

The present invention relates to a drive coupling for virtually coaxial shafts, i.e. coaxial but for slight mechanical inaccuracies.

Such couplings consist normally in two transmission components, associated with respective driving and driven shafts, which are connected one to another mechanically by way of flexible means such as will accommodate any slight degree of axial misalignment between the two shafts.

In one coupling of the type in question, flexible means consist in a single annular element embodied in elastic material, through which first and second threaded fasteners are inserted longitudinally and radially, respectively, the first engaging in the flange of a hub keyed to one shaft and the second in a hub keyed to the remaining shaft; accordingly, it is the flexible annular element that provides a mechanical connection between the hubs and allows of transmitting rotation positively and elastically from one to the other. There are limitations on the maximum value of torque that can be transmitted by such a coupling however, and what is more, the particular type of construction and the special material required for the flexible annular element combine to produce a high cost of manufacture.

In a second flexible coupling of conventional type, the transmission components again consist in hubs keyed to the driving and driven shafts, in this instance with a cross flange at one end. Flexible means consist in a disc of deformable material through which bolts are inserted longitudinally to engage alternately with the flange of the driving shaft hub on the one hand, and that of the driven shaft hub on the other. The drawbacks affecting this coupling are exactly the same as those which affect the coupling mentioned above, inasmuch as the hubs are again connected mechanically by way of a flexible element.

In another conventional coupling, one of the two transmission components consists in a flange keyed to one shaft and affording a plurality of frontal teeth or dogs, the remaining component consisting in a hub keyed to the other shaft and affording a plurality of frontal sockets. Each single socket accommodates one of the dogs offered by the flange, together with two flexible elements disposed one on each side of the dog in such a way that each flank of the dog and the corresponding radial wall of the socket are separated by one flexible element. This type of coupling is able to transmit higher values of torque, but is costly to manufacture; moreover, the hub and flange are not fastened one to another and can therefore drift apart.

Still another flexible coupling is disclosed in the Patent US 1,642,947. In a first embodiment, the coupling is formed by two disks, in one of these disks, are fixed an annular row of pins which protrude from the face of the disk in axial direction and rest within a plurality of aligned holes in the other disk. The diameter of each of the holes is greater than the diameter of each pin and in the annular space is disposed an elastic element. In another embodiment, one of the disks is formed with an annular flange in which is nested the other disk. The latter has secured in its periphery a plurality of radially extending pins the outer end of which rest within aligned holes formed in the annular flange. Also in this case, the diameter of each of the holes is greater than the diameter of each pin and in the annular space is disposed an elastic element. In this coupling the elastic element comprises a plurality of nested helical springs whose coils interact to afford flexibility in all direction, this arrangement of the springs causes noise problems and breaks in the springs, it is quite complicated and expensive in the manufacture. Besides this coupling cannot operate as a torque limiter.

A first object of the invention, therefore, is to provide a flexible drive coupling able to transmit respectable values of torque whilst exhibiting simplicity and economy in construction.

Another function often required of drive couplings is to operate as a torque limiter; the arrangement typically adopted comprises a sprocket keyed to the driving shaft, a flanged hub keyed to the driven shaft, a centreless sprocket encircling the flanged hub, and clutch means activated by spring means which serve to keep the centreless driven sprocket associated mechanically with the flange of the hub.

The teeth of the two sprockets are identical, and thus can be connected permanently by mechanical means consisting in a loop of duplex chain.

With the driving shaft set in rotation, motion is transmitted from one sprocket to the other, thence to the flanged hub and the relative shaft by way of the clutch means.

In the event that the reaction of the driven shaft should exceed the torque setting of the clutch and spring means, the relative sprocket begins to slip on the hub and its speed of rotation is reduced.

Whilst effective enough, a coupling embodied in this manner is costly to manufacture by reason of the machining operations to which the sprockets must be subjected.

Furthermore, the very shape and form of the two sprockets dictate a certain bulkiness which ought instead to be contained as far as possible.

Another drawback betrayed by couplings of the type in question is that of the shock loads to which the driven sprocket becomes subject when the driving shaft is started and stopped, due to the inevitable clearances between the teeth and the chain; such an effect is at once detrimental to the integrity of the components in question, and instrumental in dictating more generous proportions in embodiment of the coupling.

In effect, with backlash existing between the chain and the teeth of the driven sprocket, the teeth must rotate through a given angle, however small, before effectively engaging in mesh with the chain.

Albeit minimal, this angle is sufficient for the sprocket to accumulate a certain amount of kinetic energy, with which the chain will be invested at the moment when contact occurs.

In the case of ordinary chain drives connecting parallel shafts, this contingency can be overcome easily by installing spring-tensioned idlers or jockeys to absorb the kinetic energy accumulated by the driving shaft prior to the effective engagement of the relative sprocket, by way of the chain, with the sprocket of the driven shaft. A jockey clearly cannot be incorporated into a torque limiter device for coaxially aligned shafts, given that the chain unites a pair of sprockets breasted coaxially one with the other; thus, in transmitting rotation of the driving shaft from one sprocket to the other, force is applied laterally through the chain link pivot rather than axially through the entire link as occurs in a connection between parallel shafts.

In the conventional chain drive, clearance is reduced by modifying the trajectory of the chain and ensuring that it remains properly tensioned; with coaxially coupled shafts, the same end would be achieved only by directly modifying all the dimensions and tolerances of all parts making up the mechanical linkage, namely the links of the chain and the teeth of both sprockets.

Given the evident difficulty in embodying a single drive coupling to exploit all the features typical of the conventional types mentioned thus far, an additional object of the invention is to provide a drive coupling with integral torque limiter for virtually coaxial shafts that exhibits notably compact diametral dimensions, even when connecting shafts of substantial diameter, and operates as a safety device by sensing a torque higher than the previously selected limit; also, a coupling that is free from the drawback typically besetting duplex chain arrangements for coaxial shafts, as described above.

The stated objects are realized in a drive coupling as characterized in the appended claims, which is of a type used to connect virtually coaxial shafts, one driving and one driven, and comprises at least a first drive transmission means associated with the driving shaft, and a second drive transmission means associated with the driven shaft, connected mechanically to and coaxial with the first; in a coupling according to the present invention, the drive transmission means consist respectively in a sleeve member and a hub or flange member insertable coaxially in the sleeve member and anchored stably therein by means of pegs or screws each associated with and projecting from the hub or flange member in a radial direction, of which the projecting ends are accommodated together with interposed flexible means in corresponding radial sockets or holes afforded by the sleeve member.

The invention will now be described in detail, by way of example, with the aid of the accompanying drawings, in which:
- fig 1 provides a longitudinal half elevation and half section view of a coupling according to the invention;
- fig 2 is the exploded view of a second embodiment of the coupling according to the invention;
- fig 3 shows a third embodiment of the coupling according to the invention, viewed in longitudinal half elevation and half section and in the normal operating configuration;
- fig 4 shows a further embodiment of the coupling according to the invention, viewed in longitudinal half elevation and half section and in the normal operating configuration.

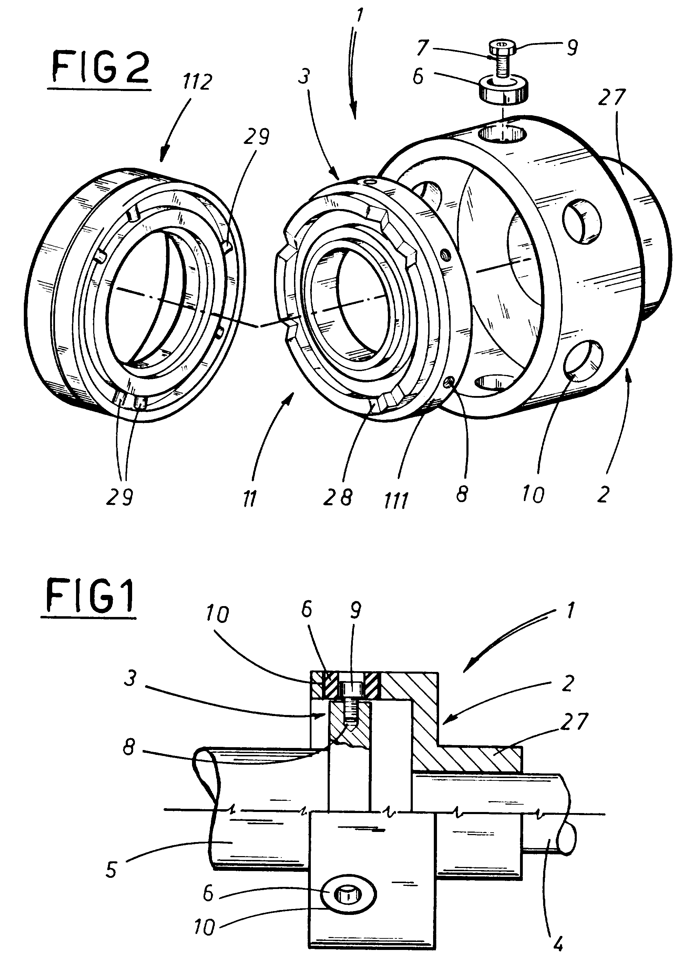

A drive coupling according to the present invention for connecting virtually coaxial shafts, denoted 1 in its entirety in fig 1, is composed essentially of a first drive transmission means 2 and a second drive transmission means 3, for association with a driving shaft 4 and a driven shaft 5, respectively.

The first such means 2 consists in a sleeve member keyed to the driving shaft 4 by way of a relative coaxial boss 27 located externally of the sleeve proper, and the second means 3 in a hub or flange 3 associated with the driven shaft 5.

The hub or flange 3, as illustrated in the drawings attached, affords a plurality of radial holes or seatings 8 in which to engage corresponding pegs or screws 7 of which the ends 9 project radially from the flange 3; these same ends (screw heads, in the example of the drawings) are accommodated within corresponding radial holes or seatings 10 afforded by the sleeve member 2, together with respective interposed flexible means denoted 6.

As illustrated in figs 1, 2 and 3 of the drawings, such means 6 consist in flexible tubular elements, one ensheathing each of the projecting peg ends or screw heads 9. Each tubular element 6 occupies the entire available space between the surface of the hole 10 and the head 9 of the respective screw 7.

The simplicity in construction of a drive coupling thus described and illustrated is abundantly clear, and requires no further comment. What is more, the hub or flange 3 enables yet further simplification, given that it can be embodied integrally with the driven shaft 5, as shown in fig 1, and might even coincide with the end of the shaft 5 itself.

In particular, the screws 7 allow transmission of a high value of torque, besides affording a mutual connection between the sleeve member 2 and the hub or flange member 3 that is structural as well as mechanical.

The flexible means 6 allow the shafts 4 and 5 a limited angle of rotation relative to one another about their common axis, also a marginal degree of axial misalignment. At the same time, the structure of the coupling 1 as a whole is not weakened in any way by the flexible means 6, since these perform no mechanical or supporting function whatever.

A coupling thus embodied lends itself to numerous applications, inasmuch as the hub or flange 3 not only might be provided by the integrally embodied flange of a driven shaft 5, or by a hub keyed to the shaft, but might also coincide or be associated with the flange or hub of a torque limiting device as in fig 2.

By way of example, fig 2 illustrates two hubs 111 and 112 of a cam and roller type torque limiting device. One of the hubs, denoted 111, affords a plurality of frontal notches 28 for the receipt of relative rollers 29 carried by the other hub 112.

The notched hub 111 affords a plurality of tapped radial holes 8 in which to engage the screws 7.

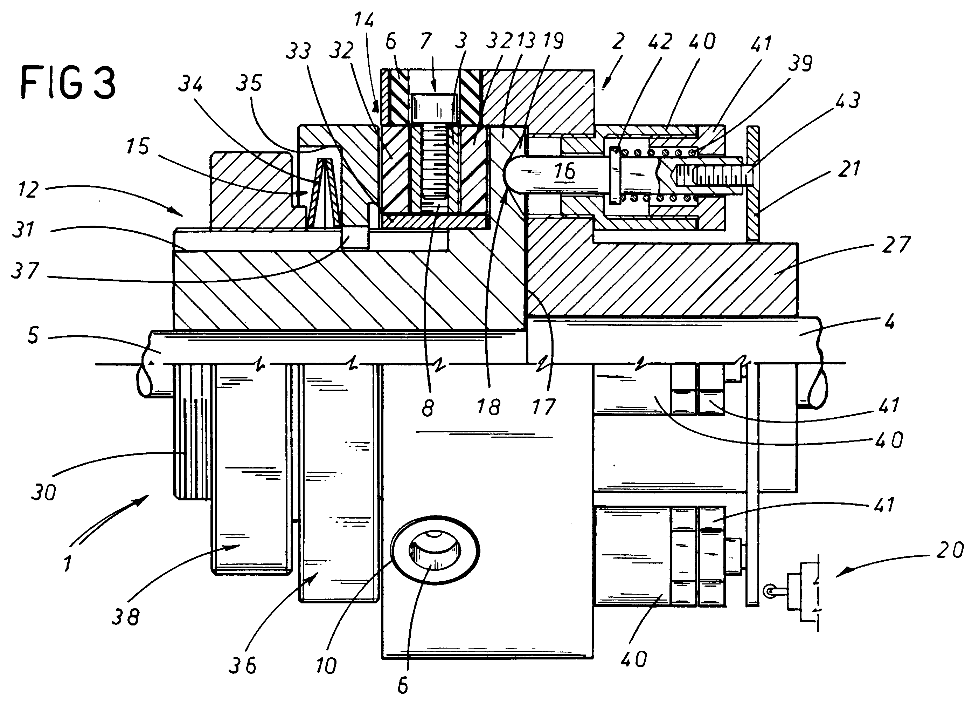

In the embodiment of fig 3, which comprises second transmission means 3 mounted to a hub 12 flanged at one end, the coupling 1 comprises clutch means 14 activated by respective spring means 15.

The first drive transmission means 2 exhibits a tubular cylindrical boss 27 affording an axial bore to accommodate the driving shaft 4.

The body 30 of the hub 12, externally threaded and with a plurality of longitudinal grooves 31 spaced apart at identical angular distance around the axis of rotation, affords an axial bore and is keyed in conventional manner to the driven shaft 5.

The second transmission means 3, likewise affording an axial bore, is mounted coaxially and rotatably to the body 30 of the flanged hub 12, free to float thereon in the axial direction; again, the first and second transmission means 2 and 3 are connected mechanically.

The clutch means 14 consist in a pair of rings 32 fashioned in material with a high coefficient of friction; these are mounted rotatably and free to float axially on the body 30 of the flanged hub 12, and disposed on either side of the second drive transmission means 3. Also discernible in fig 3 is a bushing 33 of low friction material interposed between the body 30 of the flanged hub 12 on the one hand, and the clutch rings 32 and the second drive transmission means 3 on the other, of which the purpose is to prevent damage occurring to the external thread of the body 30 whenever the flanged hub 12 and the second transmission means 3 do not rotate as one.

Spring means 14 consist in one or more belleville discs 34 (or alternatively, a single coil spring) mounted rotatably and floatably to the body 30 of the flanged hub 12, which are accommodated in a corresponding recess 35 afforded by a flange 36. The flange 36 affords an axial bore of diameter greater than the external diameter of the body 30 of the flanged hub 12, and a plurality of internal radial teeth 37 slidably engaging the longitudinal grooves 31. The bushing 33, the clutch rings 32 and the second drive transmission means 3 having being assembled on the body 30 as described above, the flange 36 is added with the face opposite from the recess 35 directed toward the flanged end 13 of the hub 12. Lastly, an adjustable locknut 36 is screwed onto the threaded body 30 to tension the springs 34 and thus cause the flange 36 to compress the clutch rings 32 and the second drive transmission means 3 against the flange 13 of the hub 12.

Likewise in this embodiment, the drive transmission means 2 and 3 consist in a sleeve member and a hub or flange, respectively, disposed coaxial one with the other.

16 denotes at least one plunger passing through the sleeve member 2, disposed parallel to the relative axis of rotation and tensioned by relative spring means 39 such that one end, denoted 18, is engaged in and separable from a corresponding countersunk socket 19 afforded by the face 17 of the flange 13 directed toward the sleeve member 2.

The remaining end of the plunger 16 interacts with means 20 by which to sense its axial movement. During normal operation of the coupling 1, the hub or flange of the second drive transmission means 3 and the flanged hub 12 are caused by the clutch means 14 to rotate at identical angular velocities.

A match between angular velocities of the sleeve member 2 and the hub or flange 3 is assured in any event by the mutual mechanical connection between the two components. Should the resistance of the driven shaft 5 exceed the value established via calibration of the clutch means 14 and springs 34, the speed of the driven shaft 5 will be reduced in relation to that of the driving shaft 4, as also will that of the flanged hub 12 in relation to that of the sleeve member 2. The resulting difference in rotational speeds leads necessarily to a relative angular movement of the flanged hub 12 and the sleeve member 2, of which the consequence is that the socket 19 is moved out of alignment with the plunger 16, thereby distancing the plunger from the flange 13 and activating the sensing means 20 which may in turn cause the drive shaft 4 to shut off.

The embodiment illustrated by way of example will be seen to comprise a plurality of plungers 16 set apart at identical angular distance around the axis of the sleeve member 2. The ends of the plungers 16 farthest from the flange 13 carry a ring 21 mounted coaxially to the boss 27 and capable of sliding axially thereon. With this arrangement, the ring 21 activates the sensing means 20 the moment that the plungers 16 are unseated from their sockets 19; thus, there is no pause while a single plunger 16 rotates into alignment with the sensing means 20, and the response obtained is all but instantaneous.

Each plunger 16 is accommodated internally of a tubular housing 40 enclosed at one end by a cap 41 and threaded externally at the remaining end to enable its being fastened to the sleeve member 2.

Both the cap 41 and the threaded end of the housing afford axial bores in which the relative plunger 16 is slidably accommodated. The spring means 39 are seated at one end against a collar 42 afforded by the plunger 16 and against the cap 41 at the other.

As illustrated in fig 3, the end of the plunger 16 nearest the cap 41 is tapped to receive a coaxial screw 43 by which the plunger itself is secured to the ring 21. Each tubular housing 40 combines with the respective cap 41, spring means 39, plunger 16 and screw 43 to create a self-contained assembly that is easily and interchangeably replaceable in the event of a malfunction occurring.

Whilst the accompanying drawings illustrate first drive transmission means 2 embodied as a sleeve member and second transmission means 3 as a hub or flange 3, the respective embodiments might equally well be reversed without prejudice to the scope of the present invention.

The stated objects are thus fully realized with the drive coupling 1 illustrated in fig 3, inasmuch as by distributing the plungers 16 around the boss 27 of the sleeve member 2, a reduction in diameter can be achieved, and this without occasioning any great reduction in strength of the boss.

Moreover, by dispensing with the tubular housings and mounting the plungers 16 direct to the sleeve member 2, the collective diameter of the plungers could be made smaller, advantageously reducing the weight of the coupling 1 overall and allowing the accommodation of a larger diameter driving shaft 4.

The structure disclosed permits of obtaining a further reduction in the radial dimensions of the coupling 1, also of reducing friction attributable to the external shape of the assembly, especially where the driving and driven shafts 4 and 5 rotate at high angular velocity.

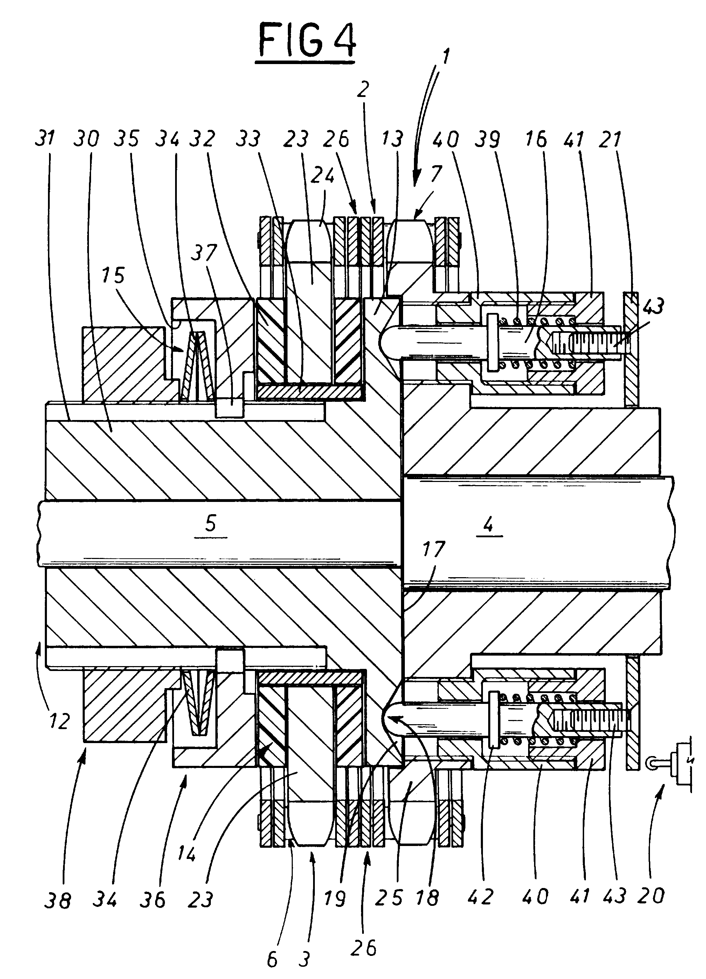

The revolving surface of the sleeve member 2 is essentially without roughness, and possesses an aerodynamic coefficient distinctly superior to that of a chain and sprocket type coupling. Nonetheless, fig 4 illustrates a duplex chain drive coupling in accordance with the present invention. Comparing figs 3 and 4, it will be seen that the two relative couplings differ only in the structure of the hub or flange 3 and the sleeve member 2. The hub or flange 3 consists in a centreless sprocket 23 of which the teeth serve as pegs or screws 7, whilst the sleeve member 2 consists in the combination of a keyed sprocket 25, and a loop of duplex chain 26 encircling both the sprockets 25 and 23. Flexible means 6 are provided in this case by the clearance between the teeth 24 of the driven sprocket 23 and the chain 26 and by play between the parts of the chain itself.

The operation of the coupling of fig 4 differs in no way whatever from that of fig 3, and therefore will not be described. Compared to conventional duplex chain type drive couplings, the embodiment of fig 1 enables a reduction in external diameter of the boss 27 without an excessive accompanying loss of strength. Nonetheless, both this coupling and the coupling illustrated in fig 3 display the characterizing feature of having associated the plungers 16 with the sleeve member 2 (or with the driving sprocket 25 in fig 4) rather than with the hub or flange 3 (the driven sprocket 23 in fig 4).

The particular arrangement of the plungers 16 and the ring 21 allows a significant reduction in the diameter of the coupling as a whole. Where coaxial shafts are connected using a conventional duplex chain coupling, in effect, it is not possible to utilize a hub with plungers such as that adopted for chain drives connecting parallel shafts, as the plungers would engage one of two sprockets united permanently and mechanically by way of the chain.

Whereas prior to the present invention the notion had been to adapt the structure of torque limiting and safety couplings as used for parallel shafts, it proved impossible to meet certain requirements fundamental to the use of torque limiters, namely of streamlining the overall diameter of the device itself and of allowing the accommodation of larger driving and driven shaft diameters. In effect, the solution was to mount the plungers 16 to a support together with the spring means; thus, as the spring means were embodied as belleville discs or coil springs accommodated within a recess afforded by an annular flange mounted to the hub, and tensioned by an adjustable lock nut, the flange had to be of diameter sufficiently greater than the diameter of the springs to permit of accommodating the plungers around the periphery. Moreover, as the plungers 16 could certainly not be allowed to impinge on the friction material of the clutch plate, but needed to engage a hard surface, i.e. the driven sprocket, the diameter of the sprocket had to be greater than effectively required simply to enable a mechanical connection with the driving sprocket.

The net result was therefore a discernible increase in the diametral proportions of the drive coupling, accompanied by inevitably greater rotating masses and kinetic forces, hence increased difficulty in stopping the shafts.

Conversely, if the overall diameter of a coupling with this construction were to remain unchanged, the inevitable consequences would be a reduction in the dimensions of the springs, hence of at least one of the shafts, and ultimately, a lower value of transmissible torque by reason of the diminished sectional strength of the shafts.

The difficulties arising from such requirements are thus comprehensively overcome in a drive coupling according to the present invention.

## Claims

1. A drive coupling for virtually coaxial shafts, one driving and one driven, comprising at least a first drive transmission means (2) associated with the driving shaft (4), and a second drive transmission means (3) associated with the driven shaft (5), said second drive transmission means (3) is insertable coaxially in the first drive transmission means (2) and anchored stably therein by means of pegs or screws (7) associated with and projecting from the second drive transmission means (3) in a radial direction, of which the projecting ends (9) are accommodated together with interposed flexible means (6) in corresponding radial sockets or holes (10) afforded by the first drive transmission means (2),
**characterized in that,**
- the second drive transmission means (3) is coaxially mounted to a flanged hub (12) keyed to the driven shaft (5);
- between said second transmission means (3) and the end of the flanged hub (12) incorporating the flange (13) and directed toward the first transmission means (2) is located clutch means (14), subject to the action of spring means (15) mounted to the end of the flanged hub (12) farthest from the flange end and serving to engage and disengage the flange (13) and the second transmission means (3);
- at least one plunger (16) is inserted through the first transmission means (2), disposed parallel to the axis of rotation and urged flexibly toward the face (17) of the flanged hub (12) directed toward the first transmission means (2) in such a way that the corresponding end (18) engages removably in a relative countersunk socket (19) afforded by the face (17);
- said plunger (16) interacts with means (20) by which to sense its axial movement.

2. A coupling as in claim 1, comprising at least two parallel plungers (16) inserted through the first transmission means (2), spaced apart at identical angular distance around the axis of rotation, and a ring (21) associated with the ends of the plungers (16) farthest from the ends (18) removably engaged in the corresponding sockets (19) afforded by the face (17) of the flanged hub (12), mounted freely over a smaller diameter section (27) of the first transmission means (2) and interacting with the sensing means (20).

3. A coupling as in claim 1, wherein the second drive transmission means (3) is provided by two hubs or flanges (111, 112) of a torque limiting device (11) mechanically associated with the driven shaft (5), in which one of the hubs (111) affords a plurality of frontal notches (28) for the receipt of relative rollers (29) carried by the other hub (112).

## Patentansprüche

1. Treibkupplung für zwei im wesentlichen koaxiale Wellen, davon eine antreibende und eine angetriebene, enthaltend wenigstens ein erstes Antriebsübertragungsmittel (2), verbunden mit der Antriebswelle (4), sowie ein zweites Antriebsübertragungsmittel (3), verbunden mit der angetriebenen Welle (5), wobei das genannte zweite Antriebsübertragungsmittel (3) koaxial in das erste Antriebsübertragungsmittel (2) einsetzbar ist und stabil darin verankert wird, und zwar durch Splinte oder Schrauben (7), die sich an dem zweiten Antriebsübertragungsmittel (3) befinden und aus diesem in radialer Richtung hervorstehen, und von denen die hervorstehenden Enden (9) zusammen mit zwischengesetzten Federmitteln (6) in entsprechende und von dem ersten Antriebsübertragungsmittel (2) aufgewiesene radiale Sitze oder Bohrungen (10) eingeführt werden, **dadurch gekennzeichnet,** dass
- das zweite Antriebsübertragungsmittel (3) koaxial an einer geflanschten Nabe (12) montiert ist, aufgezogen auf die angetriebene Welle (5);
- zwischen dem genannten zweiten Antriebsübertragungsmittel (3) und dem Ende der den Flansch (13 enthaltenden und auf das erste Antriebsübertragungsmittel gerichteten geflanschten Nabe (12) Kupplungsmittel (14) angeordnet sind, die der Wirkung von Federmitteln (15) unterliegen, welche an dem Ende der geflanschten Nabe (12) montiert sind, das sich am weitesten von dem Flanschende befindet, und die dazu dienen, sich mit dem Flansch (13) und dem zweiten Antriebsübertragungsmittel (3) zu verbinden und von diesen zu lösen;
- wenigstens ein Plunger (16) durch das erste Antriebsübertragungsmittel (2) geführt ist, angeordnet parallel zu der Drehachse und federnd in Richtung der Fläche (17) der geflanschten Nabe (12) gedrückt, welche dem ersten Antriebsübertragungsmittel (2) zugewandt ist, und zwar auf solche Weise, dass das entsprechende Ende (18) lösbar in einen entsprechenden versenkten Sitz (19) greift, der von der Fläche (17) aufgewiesen wird;
- der genannte Plunger (16) mit Mitteln (20) zusammenwirkt, durch welche dessen axiale Bewegung erfasst wird.

2. Treibkupplung nach Patentanspruch 1, enthaltend wenigstens zwei parallele Plunger (16), die durch das erste Antriebsübertragungsmittel (2) geführt werden und sich in einem gleichen Winkelabstand rund um die Drehachse befinden, sowie einen Ring (21), der mit den Enden der Plunger (16) verbunden ist, die sich am weitesten von den Enden (18) befinden, welche lösbar in die entsprechenden Sitze (19) greifen, die von der Fläche (17) der geflanschten Nabe (12) aufgewiesen werden, und zwar frei montiert auf einem Abschnitt von kleinerem Durchmesser des ersten Antriebsübertragungsmittels (2) und mit den Abtastmitteln (20) zusammenwirkend.

3. Treibkupplung nach Patentanspruch 1, bei welchem das zweite Antriebsübertragungsmittel (3) mit zwei Naben oder Flanschen (111, 112) einer Vorrichtung zur Drehmomentbegrenzung (11) versehen ist, mechanisch verbunden mit der angetriebenen Welle (5), in welcher eine der Naben (111) eine Anzahl von frontalen Aussparungen (28) zur Aufnahme von entsprechenden Rollen (29) aufweist, die von der anderen Nabe (112) getragen werden.

## Revendications

1. Un accouplement pour arbres pratiquement coaxiaux, l'un moteur et l'autre entraîné, comprenant au moins un premier dispositif de transmission (2) associé à l'arbre moteur (4), et un deuxième dispositif de transmission (3) associé à l'arbre entraîné (5), ledit deuxième dispositif de transmission (3) pouvant s'insérer de façon coaxiale dans le premier dispositif de transmission (2) et étant fixé de façon stable dans ce dernier au moyen de broches ou vis (7) associées au deuxième dispositif de transmission (3) et saillant de ce dernier dans une direction radiale, dont les extrémités saillantes (9) sont logées au moyen d'élément flexibles (6) dans des logements ou orifices radiaux (10) présentés par le premier dispositif de transmission (2),
caractérisé en ce que,
- le deuxième dispositif de transmission (3) est monté de façon coaxiale sur un moyeu bridé (12) claveté à l'arbre entraîné (5);
- entre ledit deuxième dispositif de transmission (3) et l'extrémité du moyeu bridé (12) incorporant la bride (13) et dirigé vers le premier dispositif de transmission (2) est monté un dispositif d'embrayage (14), soumis à l'action du dispositif à ressorts (15) monté à l'extrémité du moyeu bridé (12) le plus éloigné de l'extrémité de la bride et servant à embrayer et à débrayer la bride (13) et le deuxième dispositif de transmission (3);
- au moins un piston (16) est inséré à travers le premier dispositif de transmission (2), disposé parallèlement à l'axe de rotation et comprimé de façon flexible contre la face (17) du moyeu bridé (12) dirigée vers le premier dispositif de transmission (2) de façon telle que l'extrémité correspondante (18) s'engage de façon non permanente dans un logement évasé (19) présenté par la face (17);
- ledit piston (16) interagit avec le dispositif (20) servant à capter son mouvement axial.

2. Un accouplement suivant la revendication 1, comprenant au moins deux pistons parallèles (16) insérés à travers le premier dispositif de transmission (2), espacés suivant un angle identique autour de l'axe de rotation, et un collier (21) associé aux extrémités des pistons (16) les plus éloignés des extrémités (18), engagés de façon non permanente dans les logements correspondants (19) présentés par la face (17) du moyeu bridé (12), monté librement sur une section de plus petit diamètre (27) du premier dispositif de transmission (2) et interagissant avec le capteur (20).

3. Un accouplement suivant la revendication 1, dans lequel le deuxième dispositif de transmission (3) est fourni par deux moyeux ou brides (111, 112) d'un dispositif limiteur de couple (11) associé mécaniquement à l'arbre entraîné (5), dans lequel l'un des moyeux (111) présente un ensemble de crans frontaux (28) destinés à recevoir des rouleaux (29) montés sur l'autre moyeu (112).
